(19) Europäisches Patentamt
European Patent Office
Office européen des brevets

(11) **EP 2 510 612 B1**

(12) **FASCICULE DE BREVET EUROPEEN**

(45) Date de publication et mention
de la délivrance du brevet:
**13.11.2019 Bulletin 2019/46**

(51) Int Cl.:
***H02P 21/13*** *(2006.01)*     ***H02P 21/14*** *(2016.01)*
***H02P 23/14*** *(2006.01)*

(21) Numéro de dépôt: **10796330.8**

(22) Date de dépôt: **10.12.2010**

(86) Numéro de dépôt international:
**PCT/EP2010/069406**

(87) Numéro de publication internationale:
**WO 2011/070165 (16.06.2011 Gazette 2011/24)**

(54) **DISPOSITIF DE COMMANDE D'UNE MSAP**

VORRICHTUNG ZUR STEUERUNG EINER PERMANENTMAGNETISCHE SYNCHRONMASCHINE

DEVICE FOR CONTROLLING A PERMANENT-MAGNET SYNCHRONOUS MACHINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.12.2009 FR 0958879**

(43) Date de publication de la demande:
**17.10.2012 Bulletin 2012/42**

(73) Titulaire: **Safran Electrical & Power
31702 Blagnac Cedex (FR)**

(72) Inventeurs:
• **LEJEUNE, Guilhem**
 **F-26500 Bourg Les Valence (FR)**
• **VIEILLARD, Sébastien**
 **F-77720 La Chapelle Gauthier (FR)**

(74) Mandataire: **Ilgart, Jean-Christophe et al
BREVALEX
95, rue d'Amsterdam
75378 Paris Cedex 8 (FR)**

(56) Documents cités:
JP-A- 2001 112 282    US-A- 4 777 422
US-A- 5 969 499    US-A1- 2005 140 324

**Description**

## DOMAINE TECHNIQUE

La présente invention concerne le domaine de commande des machines synchrones à aimants permanents (MSAP).

## ÉTAT DE LA TECHNIQUE ANTERIEURE

Une machine synchrone à aimants permanents (MSAP) comporte un stator et un rotor. D'une manière générale, le stator comporte des enroulements connectés en étoile et le rotor comporte des aimants permanents.

Habituellement, une MSAP est alimentée par un onduleur qui permet de diminuer le taux d'ondulation des courants et couple de la machine.

Une MSAP présente un couple élevé et une inertie très faible. De plus, elle a des inductances relativement faibles, ce qui entraîne des réponses rapides des courants et donc du couple.

Ainsi, il est très avantageux d'utiliser les MSAP dans la motorisation d'actionneurs de forte puissance et de haute performance, notamment dans les systèmes embarqués d'un aéronef.

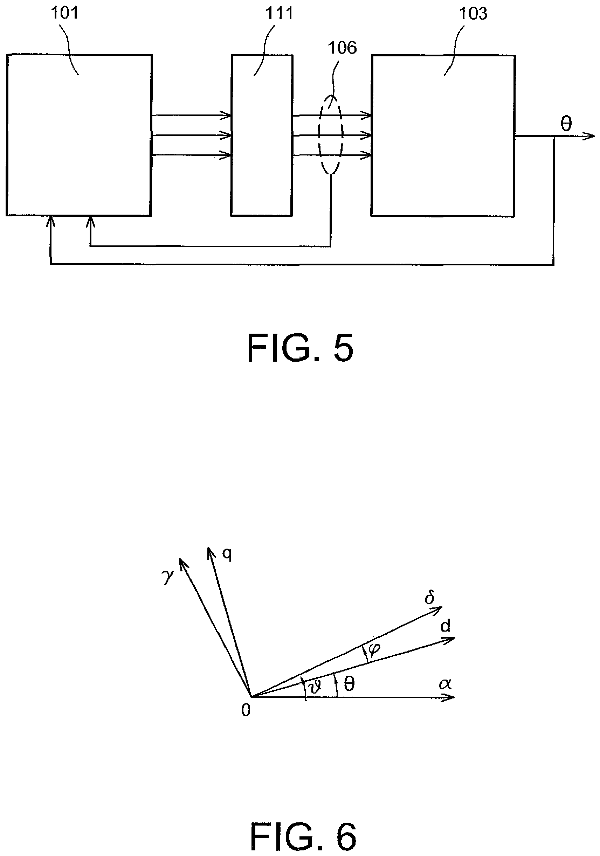

La figure 5 représente de manière schématique un système comportant un dispositif de commande 101, un onduleur 111 et une MSAP 103.

L'onduleur 111 alimente la MSAP 103 à partir d'une tension continue. Il permet d'imposer aux bornes de la MSAP 103 des tensions d'amplitude et de fréquence réglables par le dispositif de commande 101.

Le dispositif de commande 101 est configuré pour commander vectoriellement les tensions de l'onduleur 111 en fonction des données électriques 106 de retour et surtout d'une donnée précise sur la position θ du rotor. Cette information provient habituellement d'un capteur de position ou de vitesse placé sur l'arbre de la machine.

Toutefois, il existe aussi des dispositifs de commande des MSAP sans capteur (voir par exemple, la publication de Babak Nahid-Mobarakeh et al., intitulée "Analyse de convergence des lois de commande sans capteur des MSAP fondées sur l'estimation de la fém," Revue Internationale de Génie Electrique, Article Vol6/5-6-2003-      pp547-577 -doi:10.3166/rige.6.545-577).

On notera que la description concernant le dispositif de commande sans capteur provient essentiellement de la publication de Babak Nahid-Mobarakeh et *al*, ci-dessus.

D'une manière générale, les équations électriques d'une MSAP dans un repère fixe lié au stator sont décrites par :

$$\begin{bmatrix} v_a \\ v_b \\ v_c \end{bmatrix} = R \begin{bmatrix} i_a \\ i_b \\ i_c \end{bmatrix} + \frac{d}{dt} \begin{bmatrix} \psi_a \\ \psi_b \\ \psi_c \end{bmatrix}$$

avec $v_a$, $v_b$, $v_c$ les tensions des phases statoriques, $R$ la résistance des phases statoriques, $i_a$, $i_b$, $i_c$ les courants des phases statoriques, et $\psi_a$, $\psi_b$, $\psi_c$ les flux à travers les enroulements statoriques.

La MSAP peut aussi être modélisée de manière très simple dans un repère tournant lié au rotor.

La figure 6 illustre un repère tournant $d$-$q$ lié au rotor (appelé repère de Park) comprenant un axe direct $Od$ et un axe en quadrature $Oq$. L'axe direct $Od$ fait un angle θ par rapport à un axe fixe $O\alpha$ lié au stator. Plus précisément, l'angle θ désigne la position du rotor repérée par son axe d'excitation $Od$.

En appliquant la transformation de Concordia $T_{32}$ et la transformation de Park au système d'équations ci-dessus, on peut exprimer les équations électriques dans le repère de Park $d$-$q$, de la manière suivante :

$$v_d = Ri_d + L\frac{di_d}{dt} - p\Omega Li_q + e_d$$

$$v_q = Ri_q + L\frac{di_q}{dt} - p\Omega Li_d + e_q$$

avec $v_d$, $v_q$ et $i_d$, $i_q$ les composantes directes et en quadrature de tension et de courant, $L$ l'inductance statorique, $\Omega$ la vitesse de rotation du rotor (c'est-à-dire, la vitesse angulaire du repère $d$-$q$), $p$ le nombre de paires de pôles des aimants permanents du rotor, et $e_d$, $e_q$ les composantes de la force électromotrice «fém» dans le repère $d$-$q$ définies par les relations suivantes :

$$e_d = 0$$

$$e_q = p\Omega\psi_f$$

avec $\psi_f$ le flux des aimants à travers le circuit équivalent direct.

Etant donné que la position du rotor θ et la vitesse angulaire $\Omega$ ne sont pas mesurées, le repère $d$-$q$ ne peut pas être localisé et les composantes des grandeurs électriques dans ce repère sont inconnues.

Habituellement, pour résoudre ce problème, on définit un repère tournant d'estimation δ-γ dont la position $\vartheta$ et la vitesse $\Omega_c$ sont connues. L'axe $O\delta$ du repère d'estimation δ-γ fait un angle $\vartheta$ par rapport à l'axe fixe $O\alpha$ et un angle φ par rapport à l'axe $Od$. L'angle φ indique le décalage entre les axes $O\delta$ et $Od$

Le problème de la commande vectorielle sans capteur consiste alors à déterminer la vitesse angulaire $\Omega_c$ de sorte que l'écart de position $\varphi$ entre $\vartheta$ et $\theta$ s'annule.

Les équations électriques de la MSAP dans le repère d'estimation $\delta$-$\gamma$ peuvent alors s'écrire de la manière suivante :

$$v_\delta = Ri_\delta + L\frac{di_\delta}{dt} - p\Omega_c Li_\gamma + e_\delta$$

$$v_\gamma = Ri_\gamma + L\frac{di_\gamma}{dt} - p\Omega_c Li_\delta + e_\gamma$$

avec $v_\delta$, $v_\gamma$ et $i_\delta$, $i_\gamma$ les composantes de tension et de courant dans le repère $\delta$-$\gamma$, $\Omega_c$ la vitesse angulaire du repère $\delta$-$\gamma$, et $e_\delta$, $e_\gamma$ les composantes de la fém dans le repère $\delta$-$\gamma$ définies par les relations suivantes :

$$e_\delta = p\psi_f \Omega \sin\varphi$$

$$e_\gamma = p\Omega\psi_f \cos\varphi$$

Généralement, pour commander la MSAP sans capteur, on estime les composantes $e_\delta$, $e_\gamma$ de la fém dans le repère tournant d'estimation $\delta$-$\gamma$. Si celui-ci coïncide avec le repère *d-q* lié au rotor, la composante directe de la fém dans le repère tournant d'estimation devient nulle. Cela donne un critère qui permet de corriger la position $\vartheta$ et la vitesse $\Omega_c$ du repère tournant d'estimation $\delta$-$\gamma$ pour qu'il se synchronise avec le repère *d-q* lié au rotor. Ensuite, la position et la vitesse du rotor se déduisent directement de la position et la vitesse du repère d'estimation $\delta$-$\gamma$.

Le problème de la commande vectorielle sans capteur se résume alors à déterminer une loi de commande définissant la vitesse angulaire $\Omega_c$ et les composantes des tensions statoriques $v_\delta$, $v_\gamma$ dans le repère $\delta$-$\gamma$ qui garantit la régulation de $\varphi$ à zéro, et les composantes des courants $i_\delta$, $i_\gamma$ à leurs références $i_{\delta ref}$, $i_{\gamma ref}$ déterminées par le couple de référence $\Gamma_{ref}$.

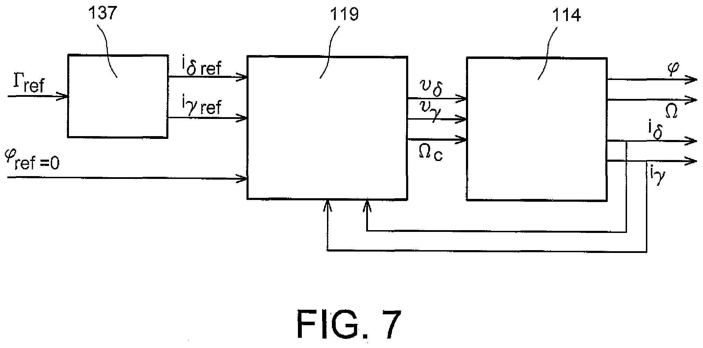

La figure 7 illustre de manière schématique un dispositif de commande sans capteur.

Ce dispositif de commande comporte un convertisseur couple-courants 137, des moyens de commande vectorielle 119, et une modélisation de l'ensemble 114 onduleur-MSAF dans le repère $\delta$-$\gamma$.

Le convertisseur 137 réalise le passage du couple en courant en transformant la valeur du couple de référence (ou couple de cosigne) $\Gamma_{ref}$ en des courants de références $i_{\delta ref}$, $i_{\gamma ref}$ correspondants dans le repère $\delta$-$\gamma$.

Les moyens de commande vectorielle 119 déterminent une loi de commande pour commander l'ensemble onduleur-MSAF 114 en garantissant la régulation de $\varphi$ à zéro ($\varphi_{ref} = 0$). Cette loi de commande définit la vitesse angulaire $\Omega_c$ et les composantes des tensions statoriques $v_\delta$, $v_\gamma$ dans le repère $\delta$-$\gamma$ en fonction des composantes des courants $i_\delta$, $i_\gamma$ obtenues à partir des mesures des courants de retour, et les courants de références $i_{\delta ref}$, $i_{\gamma ref}$.

Un dispositif de commande sans capteur est particulièrement robuste car il comprend un élément de détection en moins. Ainsi, un dispositif de commande sans capteur est plus simple à réaliser et peut avoir une durée de vie plus grande qu'un dispositif de commande avec capteur.

Cependant, un capteur de position est en général très précis et par conséquent, un dispositif de commande utilisant un capteur de position peut réguler les tensions de l'onduleur alimentant la MSAF avec plus de précision qu'un dispositif de commande sans capteur.

L'objet de la présente invention est par conséquent de proposer un dispositif de commande d'une MSAF présentant une fiabilité optimale et une très grande de sécurité qui sont des préoccupations majeures en aéronautique. Le document JP 2001 11228 décrit un dispositif de commande d'un moteur synchrone, comportant un capteur pour prélever une mesure de la position du rotor, des moyens de contrôle pour contrôler un point de fonctionnement du moteur en fonction de la position du rotor, des moyens d'estimation pour déterminer une estimation de la position du rotor et un détecteur de panne pour détecter une panne dudit capteur.

Le document US 5 969 499 décrit également un dispositif de commande d'un moteur synchrone, comportant un capteur pour prélever une mesure de la vitesse (et non pas la position) du rotor, des moyens de contrôle pour contrôler le fonctionnement du moteur en fonction de la vitesse du rotor et des paramètres de consigne, et des moyens d'estimation pour déterminer une estimation de la vitesse du rotor.

## EXPOSÉ DE L'INVENTION

La présente invention concerne un dispositif de commande d'une machine synchrone à aimants permanents « MSAP » comprenant un stator et un rotor et alimentée par un onduleur, le dispositif de commande comportant :

- un capteur pour prélever une mesure $\theta_m$ de la position du rotor,
- des moyens de contrôle pour contrôler un point de fonctionnement de la MSAP en fonction de la position du rotor et des paramètres de consigne,
- des moyens d'estimation pour déterminer une estimation $\hat{\theta}$ de la position du rotor dans un repère de Park d'estimation $\delta$-$\gamma$ lié au rotor, lesdits moyens d'estimation comportant des moyens d'ajustement pour mettre ladite position du rotor $\hat{\theta}$ estimée en poursuite par rapport à ladite position du rotor $\theta_m$ mesurée,
- un détecteur de panne pour détecter une panne dudit capteur, et

- un commutateur configuré pour connecter les moyens de contrôle au capteur afin que les moyens de contrôle reçoivent la position mesurée $\theta_m$ du rotor tant que le détecteur de panne ne signale aucune panne dudit capteur, et sinon pour connecter les moyens de contrôle aux moyens d'estimation afin que les moyens de contrôle reçoivent la position estimée $\hat{\theta}$ du rotor lorsque le détecteur de panne signale une panne dudit capteur.

Ceci permet d'augmenter la disponibilité de la MSAP en mode dégradé en assurant le bon fonctionnement de la machine en cas de panne du capteur. On notera que ce dispositif favorise la commande de la MSAP avec la mesure prélevée par le capteur et ne passe à la commande sans capteur que lorsqu'une anomalie du capteur a été détectée tout en permettant d'éviter d'avoir un écart important entre les deux positions au moment où la commande avec capteur bascule vers une commande sans capteur.

Avantageusement, les moyens d'estimation comportent :

- un estimateur de force électromotrice pour estimer des composantes $\hat{e}_\delta$, $\hat{e}_\gamma$ de la force électromotrice «fém» dans le repère de Park d'estimation $\delta$-$\gamma$ en fonction des grandeurs définies dans ledit repère de Park comprenant des composantes des courants $i_\delta$, $i_\gamma$ obtenues à partir des mesures des courants statoriques, des composantes des tensions statoriques $v_\delta$, $v_\gamma$ correspondant aux tensions de consigne de l'onduleur, et d'une vitesse de rotation $\Omega_c$ du rotor,
- un estimateur de vitesse utilisant lesdites composantes estimées $\hat{e}_\delta$, $\hat{e}_\gamma$ de la fém en provenance de l'estimateur de force électromotrice et utilisant un correcteur non linéaire pour déterminer la vitesse de rotation $\Omega_c$ selon une loi de commande présentant un domaine de convergence globale comprenant un unique point d'équilibre asymptotiquement stable correspondant au point de fonctionnement consigné de la MSAP,
- un intégrateur utilisant la vitesse de rotation $\Omega_c$ en provenance de l'estimateur de vitesse pour calculer ladite estimation $\hat{\theta}$ de la position du rotor.

Le dispositif de commande selon l'invention permet ainsi de commander la MSAP en cas de panne du capteur selon une loi de commande présentant un domaine de convergence globale qui limite la convergence vers le seul point de fonctionnement voulu quelle que soit la position du rotor par rapport au stator.

Selon un mode de réalisation de l'invention, ledit estimateur de vitesse comporte un premier estimateur configuré pour déterminer une estimation préalable $\hat{\Omega}$ de la vitesse de rotation en fonction de la composante estimée $\hat{e}_\gamma$ de la fém associée à l'axe $\gamma$ et un paramètre physique $K_f$ prédéterminé dépendant des caractéristiques des aimants permanents du rotor, selon la formule

suivante :

$$\hat{\Omega} = \frac{\hat{e}_\gamma}{K_f} \, ,$$

et en ce que le correcteur non linéaire est configuré pour réguler la vitesse de rotation en introduisant un terme correcteur à ladite valeur estimée $\hat{\Omega}$ de la vitesse de rotation selon la formule suivante :

$$\Omega_c = \frac{\hat{e}_\gamma}{K_f} - \frac{b}{K_f} sign(\hat{\Omega}).K.\hat{e}_\delta$$

où $b$ est un paramètre de fonctionnement prédéterminé, $sign(\hat{\Omega})$ est le signe de ladite valeur estimée $\hat{\Omega}$ de la vitesse de rotation, $\hat{e}_\delta$ est la fém associée à l'axe $\delta$, et où $K$ est un facteur non linéaire qui dépend du signe de la fém $\hat{e}_\delta$ associée à l'axe $\delta$ et d'un coefficient prédéterminé $\xi$ selon la formule et les conditions suivantes :

$$K = 1 - \xi.sign(\hat{e}_\delta)$$

avec

$$0 < \xi < 1$$

et

$$\frac{1}{1+\xi} < b < \frac{1}{1-\xi} \, .$$

Ainsi, le correcteur non linéaire permet de tendre vers un repère réel du rotor en régulant la force électromotrice $e_\delta$ associée à l'axe $\delta$ à zéro en rendant instable tout point de fonctionnement non désiré. Ceci impose une convergence rapide vers le point de fonctionnement désiré tout en permettant une inversion de la vitesse de rotation.

Lesdits moyens d'ajustement sont configurés pour réaliser un PI entre la position du rotor $\theta_m$ mesurée et la position du rotor $\hat{\theta}$ estimée.

Les moyens d'ajustement peuvent avantageusement comporter un moyen d'inhibition pour inhiber les moyens d'ajustement lorsqu'une panne dudit capteur est détectée.

Si une panne est détectée, la correction apportée par les moyens d'ajustement est avantageusement inhibée puisque la position du rotor $\theta_m$ mesurée est vraisemblablement fausse.

Avantageusement, lesdits moyens d'estimation comportent des moyens d'initialisation pour réinitialiser l'estimation de la position du rotor $\hat{\theta}$ avec une dernière estimation $\hat{\theta}_0$ de la position du rotor avant la détection d'une panne du capteur.

Ceci permet d'éviter les oscillations de transition et de maintenir constante la valeur du couple lorsque la commande avec capteur est commutée vers la commande sans capteur.

L'invention vise également une machine synchrone à aimant permanent MSAP comportant un dispositif de commande selon les caractéristiques ci-dessus.

L'invention vise aussi un actionneur dans un aéronef comportant une MSAP selon les caractéristiques ci-dessus.

L'invention concerne également un procédé de commande d'une machine synchrone à aimants permanents « MSAP » comprenant un stator et un rotor et alimentée par un onduleur, le procédé de commande comportant les étapes suivantes :

- mesurer au moyen d'un capteur une position $\theta_m$ du rotor, et
- contrôler un point de fonctionnement de la MSAP en fonction de la position du rotor, et des paramètres de consigne,
- déterminer une estimation $\hat{\theta}$ de la position du rotor dans un repère de Park d'estimation $\delta$-$\gamma$ lié au rotor,
- mettre ladite position du rotor $\hat{\theta}$ estimée en poursuite par rapport à ladite position du rotor $\theta_m$ mesurée,
- détecter une panne dudit capteur, et
- contrôler le point de fonctionnement de la MSAP en fonction de la position mesurée $\theta_m$ du rotor tant que le capteur n'est pas en panne, et sinon contrôler le point de fonctionnement de la MSAP en fonction de la position estimée $\hat{\theta}$ du rotor lorsque le capteur est en panne.

Le procédé de commande comporte en outre les étapes suivantes :

- estimer des composantes $\hat{e}_\delta$, $\hat{e}_\gamma$ de la force électromotrice « fém » dans le repère de Park d'estimation $\delta$-$\gamma$ en fonction des grandeurs définies dans ledit repère de Park comprenant des composantes des courants $i_\delta$, $i_\gamma$ obtenues à partir des mesures des courants statoriques, des composantes des tensions statoriques $v_\delta$, $v_\gamma$ correspondant aux tensions de consigne de l'onduleur, et d'une vitesse de rotation $\Omega_c$ du rotor,
- estimer la vitesse de rotation $\Omega_c$ en fonction desdites composantes estimées $\hat{e}_\delta$, $\hat{e}_\gamma$ de la fém et en utilisant un correcteur non linéaire, selon une loi de commande présentant un domaine de convergence globale comprenant un unique point d'équilibre asymptotiquement stable correspondant au point de fonctionnement consigné de la MSAP,
- calculer ladite estimation $\hat{\theta}$ de la position du rotor en fonction de la vitesse de rotation $\Omega_c$.

Le procédé de commande comporte en outre les étapes suivantes :

- déterminer une estimation préalable $\hat{\Omega}$ de la vitesse de rotation en fonction de la composante estimée $\hat{e}_\gamma$ de la fém associée à l'axe $\gamma$ et un paramètre physique $K_f$ prédéterminé dépendant des caractéristiques des aimants permanents du rotor, selon la formule suivante :

$$\hat{\Omega} = \frac{\hat{e}_\gamma}{K_f} ,$$

- réguler la vitesse de rotation en introduisant un terme correcteur à ladite valeur estimée $\hat{\Omega}$ de la vitesse de rotation selon la formule suivante :

$$\Omega_c = \frac{\hat{e}_\gamma}{K_f} - \frac{b}{K_f} sign(\hat{\Omega}).K.\hat{e}_\delta$$

où $b$ est un paramètre de fonctionnement prédéterminé, $sign(\hat{\Omega})$ est le signe de ladite valeur estimée $\hat{\Omega}$ de la vitesse de rotation, $\hat{e}_\delta$ est la fém associée à l'axe $\delta$, et où $K$ est un facteur non linéaire qui dépend du signe de la fém $\hat{e}_\delta$ associée à l'axe $\delta$ et d'un coefficient prédéterminé $\xi$ selon la formule et les conditions suivantes :

$$K = 1 - \xi.sign(\hat{e}_\delta)$$

avec

$$0 < \xi < 1$$

et

$$\frac{1}{1+\xi} < b < \frac{1}{1-\xi} .$$

L'invention vise aussi un programme d'ordinateur comportant des instructions pour la mise en œuvre du procédé de commande ci-dessus.

## BRÈVE DESCRIPTION DES DESSINS

D'autres caractéristiques et avantages de l'invention apparaîtront à la lecture de modes de réalisation préférentiels de l'invention faits en référence aux figures jointes parmi lesquelles :

- la figure 1 représente schématiquement un dispositif de commande d'une machine synchrone à aimants permanents « MSAP », selon l'invention ;
- la figure 2 représente schématiquement un mode de réalisation du dispositif de commande de la figure 1 ;

- la figure 3 représente schématiquement un mode de réalisation de l'estimateur de vitesse illustré dans la figure 2 ;
- les figures 4A et 4B représentent schématiquement des modes de réalisation particuliers des moyens d'ajustement illustrés dans les figures 1 et 2 ;
- la figure 5 représente schématiquement un dispositif de commande d'une MSAP, selon l'art antérieur,
- la figure 6 représente un repère de Park lié au rotor d'une MSAP ; et
- la figure 7 représente schématiquement un dispositif de commande d'une MSAP sans capteur, selon l'art antérieur.

## EXPOSÉ DÉTAILLÉ DE MODES DE RÉALISATION PARTICULIERS

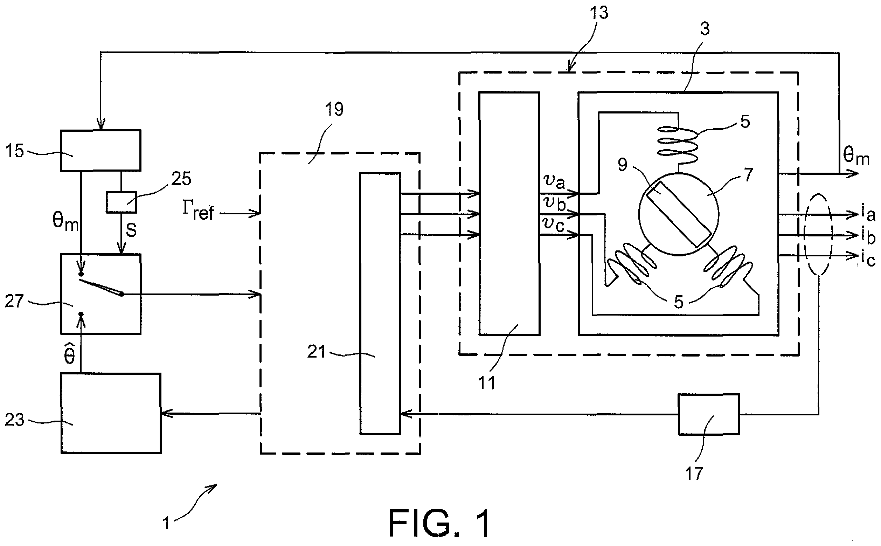

La figure 1 représente de manière schématique un dispositif de commande 1 d'une machine synchrone à aimants permanents « MSAP » 3, selon l'invention.

La machine MSAP 3 comporte de manière habituelle des enroulements statoriques 5 connectés en étoile à neutre isolé et un rotor 7 à aimants permanents 9 de constitution symétrique avec $p$ paires de pôles (dont une seule paire est ici représentée $p$=1).

La MSAP 3 est alimentée par un onduleur 11 qui impose les tensions $v_a$, $v_b$, $v_c$ aux bornes des enroulements statoriques 5. L'ensemble onduleur-MSAP selon un modèle triphasé, est schématisé par le bloc 13.

Le dispositif de commande 1 comporte un capteur de position 15, des moyens de mesure électrique 17, et des moyens de contrôle 19.

Le capteur de position 15 est un resolver (par exemple, un capteur à effet de Hall ou n'importe quel autre type de resolver) monté sur la MSAP 3 pour prélever de manière précise la mesure $\theta_m$ de la position du rotor 7. Bien entendu, la position peut aussi être déterminée de manière indirecte en mesurant la vitesse de rotation du rotor au lieu de sa position. Dans ce cas, le capteur de position peut comprendre des moyens pour mesurer la vitesse de rotation et un intégrateur pour déterminer la position.

Les moyens de mesure électrique 17 sont configurés pour mesurer des données électriques de retour et plus particulièrement, pour mesurer les courants statoriques $i_a$, $i_b$, $i_c$ de la MSAP 3.

Les moyens de contrôle 19 reçoivent des signaux sur la position du rotor, des signaux sur les courants statoriques $i_a$, $i_b$, $i_c$ mesurés par les moyens de mesure électrique 17, et des données sur le couple de référence $\Gamma_{ref}$ et/ou la rotation de référence $\Omega_{ref}$.

Les moyens de contrôle 19 comportent une interface de transformation 21 entre le modèle triphasé de l'ensemble onduleur-MSAP 13 et un modèle diphasé dans un repère de Park. Cette transformation permet de transformer les grandeurs physiques d'un modèle triphasé vers un modèle diphasé et vice versa, en fonction de la position du rotor 7.

Ainsi, les moyens de contrôle 19 peuvent commander ou contrôler le point de fonctionnement de la MSAP 3 (c'est-à-dire, le point de fonctionnement désiré ou consigné par le couple de référence $\Gamma_{ref}$ et/ou la rotation de référence $\Omega_{ref}$) en fonction de la position du rotor 9, les paramètres de consigne ($\Gamma_{ref}$ et/ou $\Omega_{ref}$), ainsi que les données électriques de retour.

Conformément à l'invention, le dispositif de commande 1 comporte en outre des moyens d'estimation 23, un détecteur de panne 25, et un commutateur 27 de transition.

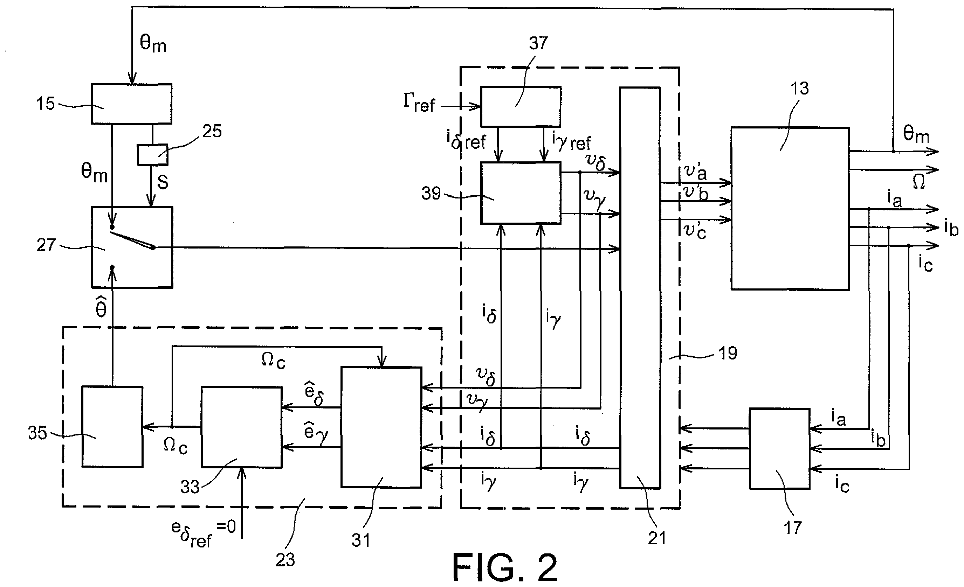

Les moyens d'estimation 23 sont configurés pour déterminer une estimation $\hat{\theta}$ de la position du rotor 7 dans le repère de Park d'estimation δ-γ. Comme, on verra plus en détail ci-après en référence à la figure 2, cette estimation peut être réalisée en corrigeant la position $\vartheta$ du repère tournant d'estimation δ-γ pour qu'il se synchronise avec le repère $d$-$q$ lié au rotor (voir aussi figure 6).

Le détecteur de panne 25 est configuré pour détecter une éventuelle panne du capteur 15. En particulier, le détecteur de panne 25 peut par exemple, consister en un signal de panne qui est engendré ou délivré par le capteur 15 lui-même lorsqu'il tombe en panne.

Le commutateur 27 est configuré pour connecter les moyens de contrôle 19 soit aux moyens d'estimation 23, soit au capteur de position 15 selon que le signal de panne S indique que le capteur 15 est en panne ou non.

Plus particulièrement, tant que le détecteur de panne ne signale aucune panne du capteur de position 15, le commutateur 27 maintient la connexion entre les moyens de contrôle 19 et le capteur de position 15 afin que les moyens de contrôle 19 reçoivent la position mesurée $\theta_m$ du rotor 7. En revanche, lorsque le détecteur de panne signale que le capteur de position 15 est en panne, le commutateur 27 connecte alors les moyens de contrôle 19 aux moyens d'estimation 23 afin que les moyens de contrôle 19 reçoivent la position estimée $\hat{\theta}$ du rotor 7.

Ainsi, dès que le capteur 27 tombe en panne, le commutateur 27 permet de faire une transition d'une commande avec capteur vers une commande sans capteur de la MSAP 3. Ceci permet d'augmenter la disponibilité de la MSAP 3 en mode dégradé. Bien entendu, dès que le capteur de position 15 est réparé, la commande de la MSAP 3 peut se faire de nouveau avec le capteur de position 15.

On notera que la figure 1 ainsi que les figures 2-4B sont également des illustrations des principales étapes du procédé de commande selon l'invention.

La figure 2 illustre un mode de réalisation du dispositif de commande de la figure 1.

Ce schéma montre que les moyens d'estimation 23 comportent un estimateur de force électromotrice 31, un estimateur de vitesse 33, et un intégrateur 35. De plus, les moyens de contrôle 19 comportent un convertisseur couple-courant 37 et un régulateur de courant 39 en plus de l'interface de transformation 21.

Le convertisseur couple-courant 37 transforme la valeur du couple de référence $\Gamma_{ref}$ en des courants de références $i_{\delta ref}$, $i_{\gamma ref}$ correspondants dans le repère de Park d'estimation $\delta$-$\gamma$.

Par ailleurs, l'interface de transformation 21 transforme les courants statoriques $i_a$, $i_b$, $i_c$ mesurés par les moyens de mesure électrique 17 en des composantes des courants $i_\delta$, $i_\gamma$ dans le repère $\delta$-$\gamma$ de Park.

En outre, le régulateur de courant 39 reçoit les courants de références $i_{\delta ref}$, $i_{\gamma ref}$ en provenance du convertisseur couple-courant 37 et les composantes des courants $i_\delta$, $i_\gamma$ dans le repère $\delta$-$\gamma$ en provenance de l'interface de transformation 21 pour déterminer les composantes des tensions statoriques $v_\delta$, $v_\gamma$ dans le repère $\delta$-$\gamma$ correspondant aux tensions de consigne de l'onduleur 11. L'interface de transformation 21 reçoit ces composantes des tensions statoriques $v_\delta$, $v_\gamma$ selon le modèle diphasique et les transforme en tensions de consigne $v_a^{'}$, $v_b^{'}$, $v_c^{'}$ de l'onduleur 11 selon le modèle triphasique.

La commande vectorielle sans capteur consiste à estimer la vitesse angulaire $\Omega_c$ de sorte que l'écart de position $\varphi$ entre $\vartheta$ et $\theta$ s'annule (voir figure 6). Autrement dit, il faut que la vitesse angulaire $\Omega_c$ soit obtenue à partir d'une loi de commande garantissant la régulation de l'erreur de position $\varphi$ à zéro (modulo $2\pi$).

Cependant, sachant que la composante $e_\delta$ de la fém dans l'axe $\delta$ tend vers zéro lorsque $\varphi$ tend vers zéro ($e_\delta = p\psi_f\Omega\sin\varphi$), alors la régulation de l'écart de position $\varphi$ à zéro peut être remplacée par la régulation de $e_\delta$ à zéro.

Cette estimation consiste à résoudre dans le repère d'estimation $\delta$-$\gamma$, les équations électriques suivantes :

$$\hat{e}_\delta = -Ri_\delta - L\frac{di_\delta}{dt} - p\Omega_c Li_\gamma + v_\delta$$

$$\hat{e}_\gamma = -Ri_\gamma - L\frac{di_\gamma}{dt} - p\Omega_c Li_\delta + v_\gamma$$

Par conséquent, l'estimateur de force électromotrice 31 reçoit les composantes des courants $i_\delta$, $i_\gamma$ en provenance de l'interface de transformation 21, les composantes des tensions statoriques $v_\delta$, $v_\gamma$ en provenance du régulateur de courant 39, et la vitesse de rotation $\Omega_c$ du rotor en provenance de l'estimateur de vitesse 33 pour estimer en fonction de ces grandeurs, les composantes $\hat{e}_\delta$, $\hat{e}_\gamma$ de la fém dans le repère d'estimation $\delta$-$\gamma$.

La vitesse de rotation $\Omega_c$ du rotor est estimée en boucle par l'estimateur de vitesse 33 en fonction des estimations $\hat{e}_\delta$, $\hat{e}_\gamma$ de la fém déterminées par l'estimateur de force électromotrice 31 et en régulant la composante $\hat{e}_\delta$ à zéro. Bien entendu, la vitesse de rotation $\Omega_c$ du rotor est initialisée par une valeur initiale prédéterminée $\Omega_{c0}$.

Avantageusement, l'estimateur de vitesse 31 utilise un correcteur non linéaire pour déterminer la vitesse de rotation $\Omega_c$ selon une loi de commande présentant un domaine de convergence globale comprenant un unique point d'équilibre asymptotiquement stable dans le sens de Lyapounov. Ce point d'équilibre correspond au point de fonctionnement consigné de la MSAF 3.

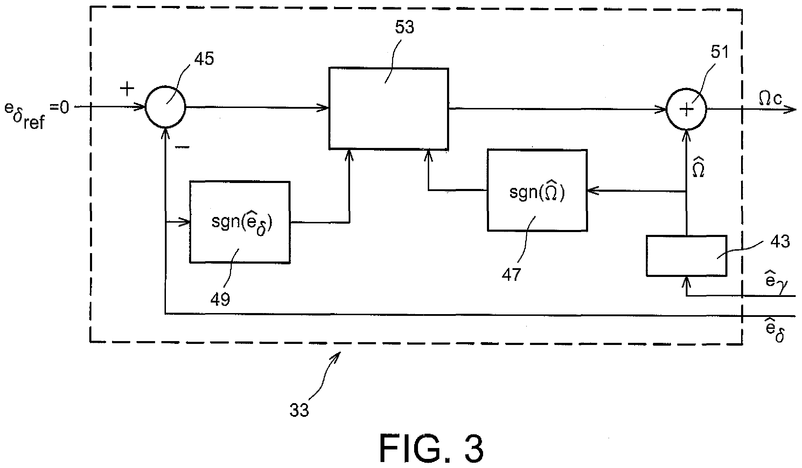

La figure 3 illustre un mode de réalisation de l'estimateur de vitesse 33.

Selon cet exemple, le schéma fonctionnel de l'estimateur de vitesse 33 comporte un premier estimateur de vitesse 43, un comparateur 45, des premier et second indicateurs de signe 47 et 49, un additionneur 51, et un correcteur non linéaire 53.

Le comparateur 45 est destiné à comparer la composante $\hat{e}_\delta$ à sa composante de référence $e_{\delta ref} = 0$. Le premier estimateur de vitesse 43 est destiné à déterminer une estimation préalable $\hat{\Omega}$ de la vitesse de rotation en fonction de la composante estimée $\hat{e}_\gamma$. Le premier indicateur de signe 47 est destiné à indiquer le signe de l'estimation préalable $\hat{\Omega}$ de la vitesse de rotation, en supposant que $sign(\hat{\Omega}) = sign(\Omega_{ref})$ où $\Omega_{ref}$ est la vitesse de rotation consignée. Le second indicateur de signe 49 est destiné à indiquer le signe de la composante $\hat{e}_\delta$. Le correcteur non linéaire 53 est destiné à introduire des termes non linéaires afin de rendre instable tout point de convergence non désiré de la loi de commande ou à éviter la convergence vers toute solution non désirée. Finalement l'additionneur 51 est destiné à additionner les termes non linéaires à l'estimation préalable $\hat{\Omega}$ pour déterminer la vitesse de rotation $\Omega_c$.

Le premier estimateur de vitesse 43 calcule le quotient entre la composante de la fém $\hat{e}_\gamma$ associée à l'axe $\gamma$ et un paramètre physique $K_f$ prédéterminé dépendant des caractéristiques des aimants permanents du rotor, selon la formule suivante :

$$\hat{\Omega} = \frac{\hat{e}_\gamma}{K_f}$$

avec

$$K_f = p\psi_f.$$

Selon un mode particulier de réalisation, le correcteur non linéaire 53 introduit un terme correcteur fonction du signe $sign(\hat{\Omega})$ de l'estimation préalable $\hat{\Omega}$ de la vitesse de rotation, d'un paramètre de fonctionnement prédéterminé $b$, du paramètre physique $K_f$, de la composante $\hat{e}_\delta$ de la fém associée à l'axe $\delta$, et finalement d'un facteur non linéaire qui dépend du signe de la composante $\hat{e}_\delta$ et d'un coefficient prédéterminé $\xi$ selon la formule suivante :

$$-\frac{b}{K_f}sign(\hat{\Omega}).K.\hat{e}_\delta$$

et

$$K = 1 - \xi.sign(\hat{e}_\delta)\ .$$

L'additionneur 51 ajoute ensuite le terme correcteur ci-dessus à l'estimation préalable $\hat{\Omega}$ pour déterminer la vitesse de rotation $\Omega_c$ selon la formule suivante :

$$\Omega_c = \frac{\hat{e}_\gamma}{K_f} - \frac{b}{K_f}sign(\hat{\Omega}).K.\hat{e}_\delta$$

On notera qu'en analysant la stabilité de la loi de commande exprimée par la vitesse de rotation $\Omega_c$ selon la formule ci-dessus (voir la publication de Babak Nahid-Mobarakeh et *al.*, "*Analyse de convergence des lois de commande sans capteur des MSAP fondées sur l'estimation de la fém,*"), on constate que toutes les trajectoires dans l'espace de phase $\varphi$-$\Omega$ convergent vers le point d'équilibre désiré ($\varphi=0$, $\Omega=\Omega_{ref}$) pour les conditions suivantes :

$$0 < \xi < 1$$

et

$$\frac{1}{1+\xi} < b < \frac{1}{1-\xi}\ .$$

Le paramètre de fonctionnement *b* est avantageusement compris entre 0 et 3 ($0<b\leq3$) et de préférence proche de 1.

La loi de commande ci-dessus permet d'empêcher toute trajectoire dans l'espace de phase de converger vers tout point d'équilibre non désiré en rendant certains points d'équilibre instables et en éloignant suffisamment les autres points dans l'espace de phase pour les éviter. Ceci permet en particulier de contourner le problème de non observabilité inhérente aux équations électriques à une vitesse de rotation proche de zéro.

En outre, la dépendance du terme correcteur au signe de la vitesse de rotation $sign(\hat{\Omega})$ permet aux trajectoires dans l'espace de phase $\varphi$-$\Omega$ de converger vers le point désiré quel que soit le signe de la vitesse de rotation consigné $\Omega_{ref}$, ce qui permet l'inversion de vitesse sans aucun problème.

Ainsi, avec les conditions ci-dessus, quel que soit le point initial de coordonnée ($-\pi\leq\varphi\leq\pi$, $\Omega=\Omega_0$), toutes les trajectoires dans l'espace de phase $\varphi$-$\Omega$ convergent vers le point d'équilibre désiré.

Autrement dit, même si au démarrage, l'erreur de position initiale est de l'ordre de $\pi$, la trajectoire converge rapidement vers le point de fonctionnement selon les valeurs consignées du couple et de la vitesse de rotation.

En outre, même si au démarrage, on part d'un point à vitesse de rotation de signe opposé à la vitesse consignée, l'erreur de position converge rapidement vers zéro permettant à la MSAP de s'installer rapidement en régime permanent selon les valeurs consignées du couple et de la vitesse de rotation.

Une fois la vitesse de rotation déterminée par l'estimateur de vitesse 33, l'intégrateur 35 intègre la vitesse de rotation $\Omega_c$ en provenance de l'estimateur de vitesse 33 pour déterminer l'estimation $\hat{\theta}$ de la position du rotor.

Par ailleurs, afin de permettre une transition uniforme et précise entre la commande avec capteur et la commande sans capteur, les moyens d'estimation 23 peuvent comprendre des moyens pour ajuster en permanence la position du rotor $\hat{\theta}$ estimée.

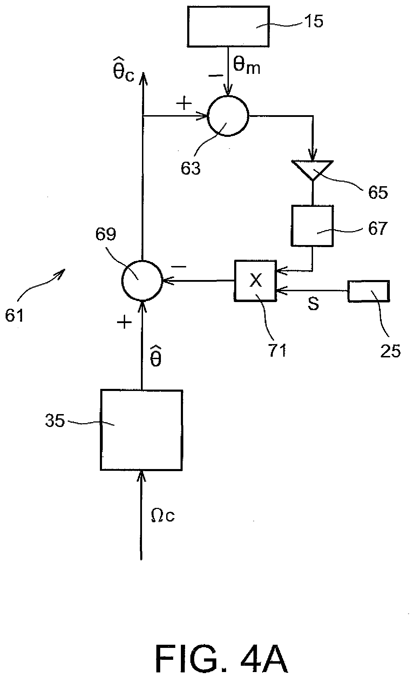

La figure 4A montre des moyens d'ajustement 61 qui peuvent être compris dans les moyens d'estimation 23. Ces moyens d'ajustement 61 sont configurés pour réaliser un PI sur la différence entre la position du rotor $\theta_m$ mesurée et la position du rotor $\hat{\theta}$ estimée afin de mettre cette dernière en poursuite par rapport à la position du rotor $\theta_m$ mesurée.

Ainsi, les moyens d'ajustement 61 peuvent comporter un comparateur de position 63 pour comparer en permanence la position du rotor $\theta_m$ mesurée par le capteur de position 15 avec la position du rotor $\hat{\theta}$ estimée en provenance de l'intégrateur 35, un filtre PI ou multiplicateur de gain 65 pour réaliser une contre réaction afin que l'intégration ne diverge pas et un intégrateur supplémentaire 67 pour synchroniser la position du rotor $\hat{\theta}$ estimée avec la position du rotor $\theta_m$ mesurée et un deuxième comparateur 69 entre l'issue de l'intégrateur supplémentaire 67 et la position du rotor $\hat{\theta}$ estimée pour corriger $\hat{\theta}_c$ la position du rotor.

On notera que la comparaison et la contre réaction se fait en permanence pour empêcher la valeur estimé $\hat{\theta}$ de la position du rotor de diverger car pendant l'utilisation du capteur de position 15, la valeur estimé $\hat{\theta}$ serait en boucle ouverte. Quand une panne du capteur de position 15 est détectée, la dernière valeur estimée de la vitesse de rotation $\Omega_c$ issue de l'estimateur de vitesse 33 à ce moment là, est injectée dans l'intégrateur 35 au moment du basculement de commande.

Par conséquent, au moment d'un éventuel basculement entre la commande avec capteur et la commande sans capteur, l'écart entre les dernières valeurs mesurée $\theta_m$ et estimée $\hat{\theta}$ est avantageusement très réduit.

Une fois la transition faite, la contre réaction n'a plus lieu d'être puisque la valeur du capteur de position 15 est erronée.

En effet, la figure 4A montre que les moyens d'ajustement 61 comprennent un moyen d'inhibition 71

pour inhiber les moyens d'ajustement 61 lorsque le détecteur de panne 25 indique une panne du capteur de position 15. Ce moyen d'inhibition 71 peut tout simplement comporter un multiplicateur qui fait le produit entre le signal de panne $S$ et la correction de la position du rotor délivrée par l'intégrateur supplémentaire 67. Ainsi, lorsqu'une panne est détectée, le signal de panne est égal à zéro ($S=0$) et donc la sortie du moyen d'inhibition 71 est mise à zéro, ce qui permet d'inhiber ou de ne pas tenir compte de la dernière valeur mesurée $\theta_m$ de la position du rotor. En revanche, tant que le signal de panne n'indique aucune anomalie du capteur ($S=1$), les moyens d'ajustement tiennent compte des valeurs mesurées $\theta_m$ de la position du rotor.

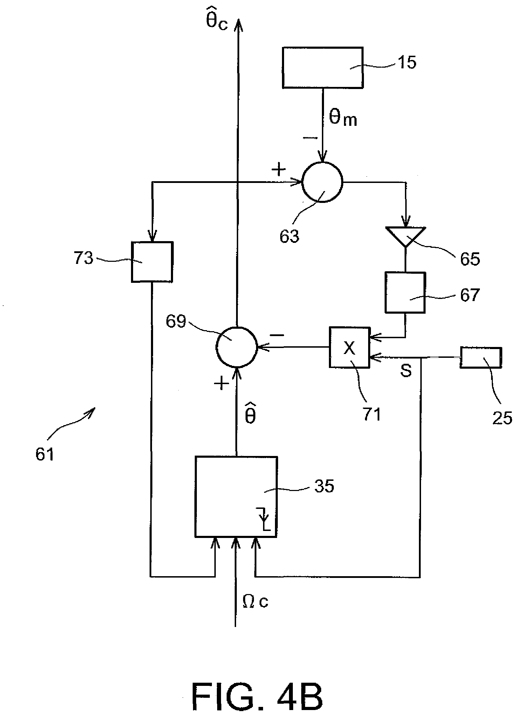

La figure 4B montre que les moyens d'estimation 23 peuvent en outre comprendre des moyens d'initialisation 73 pour réinitialiser l'estimation de la position du rotor $\hat{\theta}$ avec la dernière estimation $\hat{\theta}_0$ avant la détection d'une panne du capteur de position 15.

Les moyens d'initialisation 73 comprennent une mémoire pour mémoriser la dernière valeur de la position du rotor (estimée $\hat{\theta}$ ou corrigée $\hat{\theta}_c$) encore bonne.

En effet, lorsqu'une panne est détectée, le signal de panne $S$ engendre un trigger sur par exemple, un signal descendant qui fait que l'intégration est réinitialisée par la dernière estimation $\hat{\theta}_0$ de la position du rotor.

Ainsi, au moment de la commutation entre la commande avec capteur et la commande sans capteur, le couple lors de l'état transitoire entre les deux commandes ne présente pas d'oscillations.

On notera que les différents éléments du dispositif de commande peuvent comporter des moyens de traitement ou de calcul ayant un ou plusieurs programmes d'ordinateur comprenant des instructions de code pour la mise en œuvre du procédé de commande selon l'invention lorsque le ou les programmes d'ordinateur sont exécutés par ces différents éléments.

En conséquence, l'invention vise aussi un produit programme d'ordinateur, susceptible d'être mis en œuvre dans les différents éléments du dispositif de commande, ce programme comportant des instructions de code adaptées à la mise en œuvre d'un procédé selon l'invention telle que décrite ci-dessus.

Le système comportant la MSAP et sa commande selon l'invention peut être avantageusement utilisé dans la motorisation d'actionneurs dans les systèmes embarqués d'un aéronef. A titre d'exemple, il peut être utilisé dans le compresseur, le système de ventilation, les inverseurs de poussée, les portes, ainsi que dans beaucoup d'autres équipements de l'aéronef.

**Revendications**

**1.** Dispositif de commande (1) d'une machine synchrone à aimants permanents, MASP, (3) comprenant un stator et un rotor (7) et alimentée par un onduleur (11), le dispositif de commande comportant un capteur (15) pour prélever une mesure $\theta_m$ de la position du rotor (7) et des moyens de contrôle (19) pour contrôler un point de fonctionnement de la MSAP (3) en fonction de la position du rotor et des paramètres de consigne, **caractérisé en ce qu'**il comporte en outre :

- des moyens d'estimation (23) pour déterminer une estimation $\hat{\theta}$ de la position du rotor dans un repère de Park d'estimation δ-γ lié au rotor, lesdits moyens d'estimation (23) comportant des moyens d'ajustement (61) pour mettre ladite position du rotor $\hat{\theta}$ estimée en poursuite par rapport à ladite position du rotor $\theta_m$ mesurée,
- un détecteur de panne (25) pour détecter une panne dudit capteur (15), et
- un commutateur (27) configuré pour connecter les moyens de contrôle (19) au capteur (15) afin que les moyens de contrôle (19) reçoivent la position mesurée $\theta_m$ du rotor tant que le détecteur de panne (25) ne signale aucune panne dudit capteur, et sinon pour connecter les moyens de contrôle (19) aux moyens d'estimation (23) afin que les moyens de contrôle (19) reçoivent la position estimée $\hat{\theta}$ du rotor lorsque le détecteur de panne (25) signale une panne dudit capteur.

**2.** Dispositif de commande selon la revendication 1, **caractérisé en ce que** les moyens d'estimation (23) comportent :

- un estimateur de force électromotrice (31) pour estimer des composantes $\hat{e}_\delta$, $\hat{e}_\gamma$ de la force électromotrice «fém» dans le repère de Park d'estimation δ-γ en fonction des grandeurs définies dans ledit repère de Park comprenant des composantes des courants $i_\delta$, $i_\gamma$ obtenues à partir des mesures des courants statoriques, des composantes des tensions statoriques $v_\delta$, $v_\gamma$ correspondant aux tensions de consigne de l'onduleur, et d'une vitesse de rotation $\Omega_c$ du rotor,
- un estimateur de vitesse (33) utilisant lesdites composantes estimées $\hat{e}_\delta$, $\hat{e}_\gamma$ de la fém en provenance de l'estimateur de force électromotrice (31) et utilisant un correcteur non linéaire pour déterminer la vitesse de rotation $\Omega_c$ selon une loi de commande présentant un domaine de convergence globale comprenant un unique point d'équilibre asymptotiquement stable correspondant au point de fonctionnement consigné de la MSAP, et
- un intégrateur (35) utilisant la vitesse de rotation $\Omega_c$ en provenance de l'estimateur de vitesse (33) pour calculer ladite estimation $\hat{\theta}$ de la position du rotor.

**3.** Dispositif de commande selon la revendication 2, **caractérisé en ce que** ledit estimateur de vitesse (33) comporte un premier estimateur (43) configuré pour déterminer une estimation préalable $\hat{\Omega}$ de la vitesse de rotation en fonction de la composante estimée $\hat{e}_\gamma$ de la fém associée à l'axe $\gamma$ et un paramètre physique $K_f$ prédéterminé dépendant des caractéristiques des aimants permanents du rotor, selon la formule suivante :

$$\hat{\Omega} = \frac{\hat{e}_\gamma}{K_f} \,,$$

et **en ce que** le correcteur non linéaire est configuré pour réguler la vitesse de rotation en introduisant un terme correcteur à ladite valeur estimée $\hat{\Omega}$ de la vitesse de rotation selon la formule suivante :

$$\Omega_c = \frac{\hat{e}_\gamma}{K_f} - \frac{b}{K_f} sign(\hat{\Omega}).K.\hat{e}_\delta$$

où $b$ est un paramètre de fonctionnement prédéterminée, $sign(\hat{\Omega})$ est le signe de ladite valeur estimée $\hat{\Omega}$ de la vitesse de rotation, $\hat{e}_\delta$ est la fém associée à l'axe $\delta$, et où $K$ est un facteur non linéaire qui dépend du signe de la fém $\hat{e}_\delta$ associée à l'axe $\delta$ et d'un coefficient prédéterminé $\xi$ selon la formule et les conditions suivantes :

$$K = 1 - \xi.sign(\hat{e}_\delta)$$

avec

$$0 < \xi < 1$$

et

$$\frac{1}{1+\xi} < b < \frac{1}{1-\xi} \,.$$

**4.** Dispositif de commande selon l'une quelconque des revendications précédentes, **caractérisé en ce que** lesdits moyens d'ajustement (61) sont configurés pour réaliser un PI entre la position du rotor $\theta_m$ mesurée et la position du rotor $\hat{\theta}$ estimée.

**5.** Dispositif de commande selon l'une quelconque des revendications précédentes, **caractérisé en ce que** les moyens d'ajustement (61) comportent un moyen d'inhibition (71) pour inhiber les moyens d'ajustement lorsqu'une panne dudit capteur est détectée.

**6.** Dispositif de commande selon l'une quelconque des revendications précédentes, **caractérisé en ce que** lesdits moyens d'estimation (23) comportent des moyens d'initialisation pour réinitialiser l'estimation de la position du rotor $\hat{\theta}$ avec une dernière estimation $\hat{\theta}_0$ de la position du rotor avant la détection d'une panne du capteur (15).

**7.** Machine synchrone à aimant permanent, MASP, comportant un dispositif de commande (1) selon l'une quelconque des revendications 1 à 6.

**8.** Actionneur dans un aéronef comportant une MSAP selon la revendication 7.

**9.** Procédé de commande d'une machine synchrone à aimants permanents, MASP, (3) comprenant un stator et un rotor (7) et alimentée par un onduleur (11), le procédé de commande comportant les étapes suivantes :

- mesurer au moyen d'un capteur (15) une position $\theta_m$ du rotor, et
- contrôler un point de fonctionnement de la MSAP en fonction de la position du rotor, et des paramètres de consigne,

**caractérisé en ce que** le procédé comporte en outre les étapes suivantes :

- déterminer une estimation $\hat{\theta}$ de la position du rotor dans un repère de Park d'estimation $\delta$-$\gamma$ lié au rotor,
- mettre ladite position du rotor $\hat{\theta}$ estimée en poursuite par rapport à ladite position du rotor $\theta_m$ mesurée,
- détecter une panne dudit capteur, et
- contrôler le point de fonctionnement de la MSAP en fonction de la position mesurée $\theta_m$ du rotor tant que le capteur n'est pas en panne, et sinon contrôler le point de fonctionnement de la MSAP en fonction de la position estimée $\hat{\theta}$ du rotor lorsque le capteur est en panne.

**10.** Procédé de commande selon la revendication 9, **caractérisé en ce qu'**il comporte les étapes suivantes :

- estimer des composantes $\hat{e}_\delta$, $\hat{e}_\gamma$ de la force électromotrice «fém» dans le repère de Park d'estimation $\delta$-$\gamma$ en fonction des grandeurs définies dans ledit repère de Park comprenant des composantes des courants $i_\delta$, $i_\gamma$ obtenues à partir des mesures des courants statoriques, des composantes des tensions statoriques $v_\delta$, $v_\gamma$ correspondant aux tensions de consigne de l'onduleur, et d'une vitesse de rotation $\Omega_c$ du rotor,
- estimer la vitesse de rotation $\Omega_c$ en fonction

desdites composantes estimées $\hat{e}_\delta$, $\hat{e}_\gamma$ de la fém et en utilisant un correcteur non linéaire, selon une loi de commande présentant un domaine de convergence globale comprenant un unique point d'équilibre asymptotiquement stable correspondant au point de fonctionnement consigné de la MSAP, et

- calculer ladite estimation $\hat{\theta}$ de la position du rotor en fonction de la vitesse de rotation $\Omega_c$.

11. Procédé de commande selon la revendication 10, **caractérisé en ce qu'**il comporte les étapes suivantes :

- déterminer une estimation préalable $\hat{\Omega}$ de la vitesse de rotation en fonction de la composante estimée $\hat{e}_\gamma$ de la fém associée à l'axe $\gamma$ et un paramètre physique $K_f$ prédéterminé dépendant des caractéristiques des aimants permanents du rotor, selon la formule suivante :

$$\hat{\Omega} = \frac{\hat{e}_\gamma}{K_f} \, ,$$

- réguler la vitesse de rotation en introduisant un terme correcteur à ladite valeur estimée $\hat{\Omega}$ de la vitesse de rotation selon la formule suivante :

$$\Omega_c = \frac{\hat{e}_\gamma}{K_f} - \frac{b}{K_f} sign(\hat{\Omega}).K.\hat{e}_\delta$$

où $b$ est un paramètre de fonctionnement prédéterminé, $sign(\hat{\Omega})$ est le signe de ladite valeur estimée $\hat{\Omega}$ de la vitesse de rotation, $\hat{e}_\delta$ est la fém associée à l'axe $\delta$, et où $K$ est un facteur non linéaire qui dépend du signe de la fém $\hat{e}_\delta$ associée à l'axe $\delta$ et d'un coefficient prédéterminé $\xi$ selon la formule et les conditions suivantes :

$$K = 1 - \xi.sign(\hat{e}_\delta)$$

avec

$$0 < \xi < 1$$

et

$$\frac{1}{1+\xi} < b < \frac{1}{1-\xi} \, .$$

12. Programme d'ordinateur comportant des instructions pour la mise en œuvre du procédé de commande selon l'une quelconque des revendications 9 à 11 lorsqu'il est exécuté par des moyens de traitement.

## Patentansprüche

1. Vorrichtung zur Steuerung (1) einer Synchronmaschine mit Permanentmagneten (3), MASP, die einen Stator und einen Rotor (7) aufweist und durch einen Wechselrichter (11) mit Strom versorgt wird, wobei die Steuervorrichtung einen Sensor (15) enthält, um einen Messwert $\theta_m$ der Position des Rotors (7) abzugreifen, und Kontrollmittel (19) enthält, um einen Betriebspunkt der Synchronmaschine mit Permanentmagneten (3) in Abhängigkeit von der Position des Rotors und Einstellparametern zu kontrollieren,

**dadurch gekennzeichnet,**

**dass** sie ferner aufweist:

- Schätzungsmittel (23), um einen Schätzwert $\hat{\theta}$ der Position des Rotors in einem Schätzungs-Park-Koordinatensystem $\delta$ - $\gamma$, bezogen auf den Rotor, zu bestimmen, wobei diese Schätzungsmittel (23) Einstellungsmittel (61) umfassen, um diese geschätzte Rotorposition $\hat{\theta}$ im Hinblick auf die genannte gemessene Rotorposition $\theta_m$ nachzuführen,

- einen Störungsmelder (25), um eine Störung des genannten Sensors (15) zu erkennen, und

- einen Umschalter (27), der konfiguriert ist, um die Kontrollmittel (19) mit dem Sensor (15) zu verbinden, damit die Kontrollmittel (19) die gemessene Position $\theta_m$ des Rotors empfangen, solange der Störungsmelder (25) keine Störung des genannten Sensors (15) anzeigt, und um andernfalls die Kontrollmittel (19) mit den Schätzungsmitteln (23) zu verbinden, damit die Kontrollmittel (19) die geschätzte Position $\hat{\theta}$ des Rotors empfangen, wenn der Störungsmelder (25) eine Störung des genannten Sensors anzeigt.

2. Steuerungsvorrichtung nach Anspruch 1,

**dadurch gekennzeichnet,**

**dass** die Schätzungsmittel (23) enthalten:

- einen Schätzer für elektromotorische Kraft (31), um Komponenten $\hat{e}_\delta$, $\hat{e}_\gamma$ der elektromotorischen Kraft <<fém>> in dem Schätzungs-Park-Koordinatensystem $\delta$ - $\gamma$ in Abhängigkeit von Größen, die in diesem Park-Koordinatensystem definiert sind und Komponenten der Ströme $i_\delta$, $i_\gamma$ umfassen, die aus Messungen der Statorströme stammen, von Komponenten der Statorspannungen $v_\delta$, $v_\gamma$, die den Sollspannungen des Wechselrichters entsprechen, und von einer Drehgeschwindigkeit $\Omega_c$ des Rotors zu schätzen,

- einen Geschwindigkeitsschätzer (33), der diese von dem Schätzer für elektromotorische Kraft (31) stammenden geschätzten Komponenten $\hat{e}_\delta$, $\hat{e}_\gamma$ der elektromotorischen Kraft verwendet und einen nicht linearen Regler verwendet, um die Drehgeschwindigkeit $\Omega_c$ nach einem Regelgesetz mit einem Bereich globaler Konvergenz mit einem einzigen, asymptotisch stabilen Gleichgewichtspunkt, der dem eingetragenen Betriebspunkt der Synchronmaschine mit Permanentmagneten entspricht, zu bestimmen, und

- einen Integrator (35), der die von dem Geschwindigkeitsschätzer (33) stammende Drehgeschwindigkeit $\Omega_c$ verwendet, um den genannten Schätzwert $\hat{\theta}$ der Position des Rotors zu berechnen.

3. Steuerungsvorrichtung nach Anspruch 2, **dadurch gekennzeichnet,** **dass** der genannte Geschwindigkeitsschätzer (33) einen ersten Schätzer (43) enthält, der konfiguriert ist, um einen Vorab-Schätzwert $\hat{\Omega}$ der Drehgeschwindigkeit in Abhängigkeit von der geschätzten Komponente $\hat{e}_\gamma$ der elektromotorischen Kraft, die der Achse y zugeordnet ist, und einem vorab bestimmten physischen Parameter $K_f$, der von Eigenschaften der Permanentmagneten des Rotors abhängt, gemäß folgender Formel zu bestimmen:

$$\hat{\Omega} = \frac{\hat{e}_\gamma}{K_f},$$

und dass der nicht lineare Regler konfiguriert ist, um die Drehgeschwindigkeit zu regeln, indem er in den genannten Schätzwert $\hat{\Omega}$ der Drehgeschwindigkeit einen Korrekturterminus gemäß folgender Formel eingehen lässt:

$$\Omega_c = \frac{\hat{e}_\gamma}{K_f} - \frac{b}{K_f} sign(\hat{\Omega}).K.\hat{e}_\delta$$

wobei $b$ ein vorab bestimmter Funktionsparameter ist, $sign(\hat{\Omega})$ das Vorzeichen für den genannten Schätzwert $\hat{\Omega}$ der Drehgeschwindigkeit ist, $\hat{e}_\delta$ die elektromotorische Kraft ist, die der Achse $\delta$ zugeordnet ist, und $K$ ein nicht linearer Faktor ist, der von dem Vorzeichen der elektromotorischen Kraft $\hat{e}_\delta$, die der Achse $\delta$ zugeordnet ist, und von einem vorab bestimmten Koeffizienten $\xi$ gemäß der folgenden Formel und folgenden Bedingungen abhängt:

$$K = 1 - \xi.sign(\hat{e}_\delta)$$

$$0 < \xi < 1$$

et

$$\frac{1}{1+\xi} < b < \frac{1}{1-\xi}.$$

4. Steuerungsvorrichtung nach einem der vorigen Ansprüche, **dadurch gekennzeichnet,** **dass** die genannten Einstellungsmittel (61) konfiguriert sind, um einen PI zwischen der gemessenen Rotorposition $\theta_m$ und der geschätzten Rotorposition $\hat{\theta}$ zu bilden.

5. Steuerungsvorrichtung nach einem der vorigen Ansprüche, **dadurch gekennzeichnet,** **dass** die Einstellungsmittel (61) ein Sperr-Mittel enthalten, um die Einstellungsmittel zu sperren, wenn eine Störung des genannten Sensors gemeldet wird.

6. Steuerungsvorrichtung nach einem der vorigen Ansprüche, **dadurch gekennzeichnet,** **dass** die genannten Schätzungsmittel (23) Initialisierungsmittel enthalten, um die Schätzung der Rotorposition $\hat{\theta}$ mit einer letzten Schätzung $\hat{\theta}_0$ der Rotorposition vor der Erkennung einer Störung des Sensors (15) erneut zu initialisieren.

7. Dauermagneten-Synchronmaschine, MASP, die eine Steuerungsvorrichtung (1) nach einem der Ansprüche 1 bis 6 aufweist.

8. Betätigungselement in einem Luftfahrzeug, das eine Permanentmagneten-Synchronmaschine nach Anspruch 7 enthält.

9. Verfahren zur Steuerung einer Synchronmaschine mit Permanentmagneten (3), MASP, die einen Stator und einen Rotor (7) aufweist und durch einen Wechselrichter (11) mit Strom versorgt wird, wobei das Steuerverfahren die folgenden Verfahrensschritte umfasst:

- Messen einer Position $\theta_m$ des Rotors mittels eines Sensors (15), und
- Kontrollieren eines Betriebspunkts der Synchronmaschine mit Permanentmagneten in Abhängigkeit von der Position des Rotors und Einstellparametern, **dadurch gekennzeichnet,**

**dass** das Verfahren ferner folgende Verfahrensschritte umfasst:

- Bestimmen eines Schätzwerts $\hat{\theta}$ der Position des Rotors in einem Schätzungs-Park-Koordinatensystem $\delta$ - $\gamma$, bezogen auf den Rotor,
- Nachführen dieser geschätzten Rotorposition $\hat{\theta}$ im Hinblick auf die genannte gemessene Rotorposition $\theta_m$,
- Erkennen einer Störung des genannten Sensors, und
- Kontrollieren des Betriebspunkts der Synchronmaschine mit Permanentmagneten in Abhängigkeit von der gemessenen Position $\theta_m$ des Rotors, solange der Sensor keine Störung hat, und andernfalls Kontrollieren des Betriebspunkts der Synchronmaschine mit Permanentmagneten in Abhängigkeit von der geschätzten Position $\hat{\theta}$ des Rotors, wenn der Sensor eine Störung hat.

10. Steuerungsverfahren nach Anspruch 9,
**dadurch gekennzeichnet,**
**dass** es die folgenden Verfahrensschritte umfasst:

- Schätzen der Komponenten $\hat{e}_\delta$, $\hat{e}_\gamma$ der elektromotorischen Kraft <<fém>> in dem Schätzungs-Park-Koordinatensystem $\delta$ - $\gamma$ in Abhängigkeit von Größen, die in diesem Park-Koordinatensystem definiert sind und Komponenten der Ströme $i_\delta$, $i_\gamma$ umfassen, die aus Messungen der Statorströme stammen, von Komponenten der Statorspannungen $v_\delta$, $v_\gamma$, die den Sollspannungen des Wechselrichters entsprechen, und von einer Drehgeschwindigkeit $\Omega_c$ des Rotors,
- Schätzen der Drehgeschwindigkeit $\Omega_c$ in Abhängigkeit von den genannten geschätzten Komponenten $\hat{e}_\delta$, $\hat{e}_\gamma$ der elektromotorischen Kraft und unter Verwendung eines nicht linearen Reglers nach einem Regelgesetz mit einem Bereich globaler Konvergenz mit einem einzigen, asymptotisch stabilen Gleichgewichtspunkt, der dem eingetragenen Betriebspunkt der Synchronmaschine mit Permanentmagneten entspricht, und
- Berechnen des genannten Schätzwerts $\hat{\theta}$ der Position des Rotors in Abhängigkeit von der Drehgeschwindigkeit $\Omega_c$.

11. Steuerungsverfahren nach Anspruch 10,
**dadurch gekennzeichnet,**
**dass** es die folgenden Verfahrensschritte umfasst:

- Bestimmen eines Vorab-Schätzwerts $\hat{\Omega}$ der Drehgeschwindigkeit in Abhängigkeit von der geschätzten Komponente $\hat{e}_\gamma$ der elektromotorischen Kraft, die der Achse $\gamma$ zugeordnet ist, und einem vorab bestimmten physischen Parameter $K_f$, der von Eigenschaften der Permanentmagneten des Rotors abhängt, gemäß folgender Formel:

$$\hat{\Omega} = \frac{\hat{e}_\gamma}{K_f},$$

- Regeln der Drehgeschwindigkeit, indem in den genannten Schätzwert $\hat{\Omega}$ der Drehgeschwindigkeit ein Korrekturterminus gemäß folgender Formel eingegeben wird:

$$\Omega_c = \frac{\hat{e}_\gamma}{K_f} - \frac{b}{K_f} \, sign(\hat{\Omega}).K.\hat{e}_\delta$$

wobei $b$ ein vorab bestimmter Funktionsparameter ist, $sign(\hat{\Omega})$ das Vorzeichen für den genannten Schätzwert $\hat{\Omega}$ der Drehgeschwindigkeit ist, $\hat{e}_\delta$ die elektromotorische Kraft ist, die der Achse $\delta$ zugeordnet ist, und K ein nicht linearer Faktor ist, der von dem Vorzeichen der elektromotorischen Kraft $\hat{e}_\delta$, die der Achse $\delta$ zugeordnet ist, und von einem vorab bestimmten Koeffizienten $\xi$ gemäß der folgenden Formel und folgenden Bedingungen abhängt:

$$K = 1 - \xi.sign(\hat{e}_\delta)$$

$$0 < \xi < 1$$

et

$$\frac{1}{1+\xi} < b < \frac{1}{1-\xi}.$$

12. Computerprogramm, das Anweisungen zur Durchführung des Steuerungsverfahrens nach einem der Ansprüche 9 bis 11 enthält, wenn es durch Bearbeitungsmittel ausgeführt wird.

**Claims**

1. A device to control (1) a permanent magnet synchronous machine, PMSM, (3) including a stator and a rotor (7) and powered by an inverter (11), where the control device includes a sensor (15) to sample a measurement $\theta_m$ of the position of the rotor (7) and control means (19) to control an operating point of the PMSM (3) according to the position of the rotor and the settings, **characterised in that** it also includes:

- estimation means (23) to determine an estimate $\hat{\theta}$ of the rotor position in an estimated Park frame of reference $\delta$-$\gamma$ associated with the rotor, where the said estimation means (23) include adjustment means (61) to make said estimated rotor position $\hat{\theta}$ track said measured rotor position $\theta_m$,

- a malfunction detector (25) to detect a malfunction of the said sensor (15), and

- a switch (27) configured to connect the control means (19) to the sensor (15) in order that the control means (19) receive measured position $\theta_m$ of the rotor while the malfunction detector (25) does not indicate any malfunction of the said sensor, and otherwise to connect the control means (19) to the estimation means (23) in order that the control means (19) receive estimated position $\hat{\theta}$ of the rotor when the malfunction detector (25) indicates a malfunction of the said sensor.

2. A control device according to claim 1, **characterised in that** the estimation means (23) include:

- an electromotive force estimator (31) to estimate components $\hat{e}_\delta$, $\hat{e}_\gamma$ of the electromotive force "emf" in the estimated Park frame of reference $\delta$-$\gamma$ as a function of the magnitudes defined in the said Park frame of reference including current components $i_\delta$, $i_\gamma$ obtained from the measurements of the stator currents, the components of stator voltages $v_\delta$, $v_\gamma$ corresponding to the inverter's reference voltages, and a speed of rotation $\Omega_c$ of the rotor,

- a speed estimator (33) using said estimated components $\hat{e}_\delta$, $\hat{e}_\gamma$ of the emf obtained from the electromotive force estimator (31), and using a non-linear corrector to determine the rotational speed $\Omega_c$ according to a control law having an area of global convergence including a single point of asymptotically stable equilibrium equal to the PMSM's operating set point, and

- an integrator (35) using the rotational speed $\Omega_c$ taken from the speed estimator (33) to calculate said estimate $\hat{\theta}$ of the rotor position.

3. A control device according to claim 2, **characterised in that** the said speed estimator (33) includes a first estimator (43) configured to determine a prior estimate $\hat{\Omega}$ of the rotational speed according to estimated component $\hat{e}_\gamma$ of the emf associated with axis $\gamma$ and a predetermined physical parameter $K_f$ depending on the characteristics of the rotor's permanent magnets, according to the following formula:

$$\hat{\Omega} = \frac{\hat{e}_\gamma}{K_f} ,$$

and **in that** the non-linear corrector is configured to regulate the rotational speed by introducing a term which corrects said estimated value $\hat{\Omega}$ of the rotational speed according to the following formula:

$$\Omega_c = \frac{\hat{e}_\gamma}{K_f} - \frac{b}{K_f} sign(\hat{\Omega}).K.\hat{e}_\delta$$

where $b$ is a predetermined operational setting, $sign(\hat{\Omega})$ is the sign of said estimated value $\hat{\Omega}$ of the rotational speed, $\hat{e}_\delta$ is the emf associated with axis $\delta$, and where $K$ is a non-linear factor which depends on the sign of the emf $\hat{e}_\delta$ associated with axis $\delta$ and on a coefficient $\xi$ predetermined by means of the following formula and conditions:

$$K = 1 - \xi.sign(\hat{e}_\delta)$$

with

$$0 < \xi < 1$$

and

$$\frac{1}{1+\xi} < b < \frac{1}{1-\xi} .$$

4. A control device according to any of the previous claims, **characterised in that** the said adjustment means (61) are configured to accomplish a PI between measured rotor position $\theta_m$ and estimated rotor position $\hat{\theta}$.

5. A control device according to any of the previous claims, **characterised in that** the adjustment means (61) include a means of inhibition (71) to inhibit the adjustment means when a malfunction of the said sensor is detected.

6. A control device according to any of the previous claims, **characterised in that** the said estimation means (23) include initialisation means to reinitialise estimated rotor position $\hat{\theta}$ with a last rotor position estimate $\hat{\theta}_0$ before the detection of a malfunction of the sensor (15).

7. A permanent magnet synchronous machine PMSM including a control device (1) according to any of the claims 1 to 6.

8. An actuator in an aircraft including a PMSM according to claim 7.

9. A method for controlling a permanent magnet synchronous machine, PMSM, (3) including a stator and a rotor (7), and powered by an inverter (11), where the control method includes the following steps:

- measuring by means of a sensor (15) a position $\theta_m$ of the rotor, and
- checking an operating point of the PMSM as a function of the rotor position and the predefined parameters,

**characterised in that** the method also includes the following steps:

- determining an estimate $\hat{\theta}$ of the rotor position in an estimated Park frame of reference $\delta$ - $\gamma$ associated with the rotor,
- making said estimated rotor position $\hat{\theta}$ track said measured rotor position $\theta_m$,
- detecting a malfunction of the said sensor, and
- checking the operating point of the PMSM according to measured rotor position $\theta_m$ whilst the sensor is not malfunctioning, and otherwise checking the operating point of the PMSM as a function of estimated rotor position $\hat{\theta}$ when the sensor is malfunctioning.

10. A control method according to claim 9, **characterised in that** it includes the following steps:

- estimating components $\hat{e}_\delta$, $\hat{e}_\gamma$ of the electromotive force "emf" in the estimated Park frame of reference $\delta$ - $\gamma$ as a function of the magnitudes defined in the said Park frame of reference including components of currents $i_\delta$, $i_\gamma$ obtained from measurements of the stator currents, components of stator voltages $v_\delta$, $v_\gamma$ corresponding to the inverter's reference voltages, and a speed of rotation $\Omega_c$ of the rotor,
- estimating rotational speed $\Omega_c$ as a function of said estimated components $\hat{e}_\delta$, $\hat{e}_\gamma$ of the emf and using a non-linear corrector according to a control law having an area of global convergence including a single point of asymptotically stable equilibrium equal to the PMSM's operating set point, and
- calculating said estimated rotor position $\hat{\theta}$ as a function of rotational speed $\Omega_c$.

11. A control method according to claim 10, **characterised in that** it includes the following steps:

- determining prior estimate $\hat{\Omega}$ of the rotational speed as a function of estimated component $\hat{e}_\gamma$ of the emf associated with axis $\gamma$ and a predetermined physical parameter $K_f$ depending on the characteristics of the rotor's permanent magnets, according to the following formula:

$$\hat{\Omega} = \frac{\hat{e}_\gamma}{K_f} \text{ ,}$$

- regulating the rotational speed by introducing a corrective term to said estimated value $\hat{\Omega}$ of the rotational speed according to the following formula:

$$\Omega_c = \frac{\hat{e}_\gamma}{K_f} - \frac{b}{K_f} sign(\hat{\Omega}).K.\hat{e}_\delta$$

where $b$ is a predetermined operational setting, $sign(\hat{\Omega})$ is the sign of said estimated value $\hat{\Omega}$ of the rotational speed, $\hat{e}_\delta$ is the emf associated with axis $\delta$, and where $K$ is a non-linear factor which depends on the sign of the emf $\hat{e}_\delta$ associated with axis $\delta$ and on a coefficient $\xi$ predetermined by means of the following formula and conditions:

$$K = 1 - \xi.sign(\hat{e}_\delta)$$

with

$$0 < \xi < 1$$

and

$$\frac{1}{1+\xi} < b < \frac{1}{1-\xi} \text{ .}$$

12. A computer program including code instructions for implementing the control method according to any one of claims 9 to 11 when it is executed by processing means.

FIG. 1

FIG. 2

FIG. 3

FIG. 4A

# FIG. 4B

FIG. 5

FIG. 6

FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2001011228 A

- US 5969499 A

**Littérature non-brevet citée dans la description**

- **BABAK NAHID-MOBARAKEH et al.** Analyse de convergence des lois de commande sans capteur des MSAP fondées sur l'estimation de la fém. *Revue Internationale de Génie Electrique,* 05 Juin 2003, vol. 6, 547-577